# EUROPEAN PATENT SPECIFICATION

(11) **EP 2 660 423 B1**
(45) Date of publication and mention of the grant of the patent: **31.07.2019**
(21) Application number: 10861484.3
(22) Date of filing: 27.12.2010
(51) Int. Cl.: F01D 5/14, F01D 9/02

(54) **BLADE BODY AND ROTARY MACHINE**
SCHAUFELKOERPER UND ROTATIONSMASCHINE
CORPS D'AUBE ET MACHINE ROTATIVE

(43) Date of publication of application: 06.11.2013
(73) Proprietor: Mitsubishi Hitachi Power Systems, Ltd., Yokohama 220-8401 (JP)
(72) Inventor: SAKAMOTO Yasuro, Tokyo 108-8215 (JP); ITO Eisaku, Tokyo 108-8215 (JP); KITAGAWA Hitoshi, Tokyo 108-8215 (JP); WAKAZONO Susumu, Tokyo 108-8215 (JP)
(74) Representative: Henkel, Breuer & Partner
(86) International application number: PCT/JP2010/073563
(87) International publication number: WO 2012/090269

(56) References cited:
- EP-A1- 1 707 740
- JP-A- 9 105 310
- JP-A- 57 113 906
- JP-A- S57 113 906
- JP-A- 2003 254 002
- JP-A- 2006 336 637
- US-A- 4 968 216
- US-A- 4 968 216
- US-A1- 2006 275 134
- US-A1- 2007 140 837

## Description

### Technical Field

The present invention relates to a blade body which is applied to a rotary machine such as a turbine unit of a gas turbine, a compressor, a fan, a steam turbine or a wind mill and also relates to the rotary machine. The present invention relates in particular to the shape of a trailing edge of the blade body.

### Background Art

Conventionally, there is a case that a blade body which is applied to a rotary machine such as a turbine unit of a gas turbine is made relatively thick for increasing the strength and a trailing edge thereof is formed into a circular arc (substantially semicircular) shape as like as a part of a true circle or a linear shape cut substantially perpendicularly with respect to a camber line. As described above, where the trailing edge is formed into a circular arc shape based on a complete roundness or a linear shape cut perpendicularly with respect to a camber line, the trailing edge is relatively increased in thickness. Thus, separation of a flow on a blade surface takes place to cause a relatively large wake from the trailing edge of the blade, which contributes to an increase in flow loss or in resistance of flow channel.

Therefore, proposed is a blade body which is formed so that there is made substantially perpendicular an angle of a point where an end portion of a ventral edge line of the blade body which is a straight line or a curved line great in curvature radius is connected to an end portion of a dorsal edge line thereof (refer to JP 2005-76533A, for example).

### Summary of the Invention

### Problems to be Solved by the Invention

However, in the above-described conventional rotary machine, a flow loss due to a wake from the blade body and resistance of flow channel still account for a higher percentage of total loss. Therefore, it is desired to reduce the loss due to the wake and improve efficiency.

US 4968216A discloses a blade body which is applied to a turbine unit of a turbine engine on which the preamble portion of claim 1 is based. The blade body to be situated between inner and outer rims has elliptical forward and trailing edges which are formed with a radius of curvature to divert the incoming air to a desired angle.

EP 1707740A discloses coordinate values of the profiles of first and second stage turbine airfoil shapes for a gas turbine.

Document JPS57113906A discloses a blade having an asymmetrical trailing edge portion that begins upstream of the fictive circular arc which connects the dorsal and the ventral face of the blade.

The present invention has been made in view of the above situation, an object of which is to provide a blade body capable of reducing flow loss due to a wake from a trailing edge caused by separation of a flow on a blade surface of the blade body and resistance of flow channel and also provide a rotary machine.

### Means for Solving the Problems

The present invention proposes a blade body with the features of claim 1. The blade body (for example, any one of turbine blades 1, 21, 31 to be described in an example and embodiments) of the present invention is provided with a main body (for example, a main body 4 to be described in an example and embodiment) having a dorsal face (for example, a dorsal face 2 to be described in an example and embodiment) and a ventral face (for example, a ventral face 3 to be described in an example and embodiment) and also provided with a trailing edge portion (for example, any one of 6, 26, 36 to be described in the example and embodiments) which connects the dorsal face to the ventral face with a continuous curved face (for example, any one of curved faces 5, 25, 35 to be described in the example and embodiments). The curved face of the trailing edge portion is gradually decreased in curvature radius from one of the dorsal face and the ventral face toward a rear end portion (for example, any one of rear end portions 7, 27, 37 to be described in the example and embodiments) which is positioned most downstream in a direction at which a fluid flows and decreased to the greatest extent in curvature radius at the rear end portion, thereafter, gradually increased in curvature radius from the rear end portion toward the other of the dorsal face and the ventral face and arrives at the other of the dorsal face and the ventral face.

According to the blade body of the present invention, the curved face of the trailing edge portion continuing toward the dorsal face or the ventral face of the main body is gradually decreased in curvature radius and made thinner as it approaches the rear end portion. Therefore, a part in the vicinity of the rear end portion can be made thinner, with the strength kept, than a conventional case that a trailing edge portion is formed in such a manner that a cross section thereof is simply in a substantially semicircular shape or an angle of a point where an end portion of a dorsal edge line is connected to an end portion of a ventral edge line is made substantially perpendicular. Then, separation of a flow coming from a blade surface takes place at a backward position to make a wake from the trailing edge portion narrow, thus making it possible to reduce flow loss and improve efficiency.

Further, in the blade body of the present invention, the trailing edge portion is such that a part of the curved face positioned at the dorsal face side is different from the other of the curved face positioned at the ventral face side in the rate of decrease of a curvature radius toward the rear end portion.

According to the blade body of the present invention, even where a part of the curved face positioned at the dorsal face side is different from the other of the curved face positioned at the ventral face side in the rate of decrease of a curvature radius toward the rear end portion, a blade in the vicinity of the rear end portion can be made thinner than a conventional case that a trailing edge portion is formed in such a manner that a cross section thereof is simply in a substantially semicircular shape or an angle of a point where an end portion of a dorsal edge line is connected to an end portion of a ventral edge line is made substantially perpendicular. Therefore, separation of a flow coming from a blade surface takes place at a backward position to make a wake from the trailing edge portion narrow, thus making it possible to reduce flow loss and improve efficiency.

In the blade body of the present invention, it is acceptable that the rear end portion is disposed on an extended line (for example, an extended line 10 of the example and the embodiment) of a camber line (for example, a camber line 9 of the example and the embodiment) of the main body.

According to the blade body of the present invention, the rear end portion is disposed on an extended line of a camber line of the main body, by which a change in curvature radius is made equal between the ventral face side and the dorsal face side. It is therefore possible to easily form the shape of a blade smoothly.

In the blade body of the present invention, it is acceptable that the rear end portion is disposed further to the dorsal face side or to the ventral face side than the extended line of the camber line of the main body.

According to the blade body of the present invention, even where the rear end portion is disposed further to the dorsal face side or to the ventral face side than the extended line of the camber line of the main body, it is possible to suppress a wake resulting from separation of a flow on a blade surface, as compared with the shape of the trailing edge of the conventional blade body.

In addition, it is acceptable that the blade bodies of the present invention are a plurality of blade bodies disposed on a rotary body at an equal interval, and the curved face of the trailing edge portion is formed so as to give a curvature radius which is capable of maintaining a throat (for example, a throat S in the example and embodiment) between blades where no trailing edge portion is provided.

According to the blade body of the present invention, since the trailing edge portion gives no influence on maintaining of the throat between blades, it is possible to prevent a change in flow rate due to a decrease in the size of the throat or the like.

In addition, the rotary machine of the present invention is provided with the blade body of the present invention described above.

### Effects of the Invention

According to the blade body and the rotary machine of the present invention, the curved face of the trailing edge portion is gradually decreased in curvature radius from one of the dorsal face and the ventral face toward the rear end portion which is positioned furthest backward in the main body and decreased to the greatest extent in curvature radius at the rear end portion, thereafter, gradually increased in curvature radius from the rear end portion toward the other of the dorsal face and the ventral face and arrives at the other of the dorsal face and the ventral face. Thereby, a blade in the vicinity of the rear end portion of the trailing edge can be formed thinner than a conventional blade. As a result, separation of a flow coming from a blade surface takes place at a backward position to make narrow a wake from the trailing edge portion. This is, therefore, effective in reducing flow loss and resistance of a flow channel.

### Brief Description of the Drawings

Fig. 1 is a partial sectional view which shows a gas turbine of an Example serving to explain features of the present invention when viewed laterally.
Fig. 2 is a view which shows a profile of a turbine blade of the Example.
Fig. 3 is a partially enlarged view which shows the vicinity of a trailing edge portion given in Fig. 2.
Fig. 4 is a partially enlarged view which shows a part corresponding to that given in Fig. 3 or another mode of the Example serving to explain features of the present invention.
Fig. 5 is a view which shows a throat of the turbine blade of the Example.
Fig. 6 is a partially enlarged view which shows a part corresponding to that given in Fig. 3 of a First Embodiment of the present invention.
Fig. 7 is a partially enlarged view which shows a part corresponding to that given in Fig. 3 or another mode of the First Embodiment of the present invention.
Fig. 8 is a partially enlarged view which shows a part corresponding to that given in Fig. 3 of a Second Embodiment of the present invention.
Fig. 9 is a partially enlarged view which shows a part corresponding to that given in Fig. 3 or another mode of the Second Embodiment of the present invention.

### Best Mode for Carrying Out the Invention

Next, a description will be given of the blade body and the rotary machine of the Example serving to explain features of the present invention with reference to drawings. In the Example, as the blade body, a description will be given with reference to turbine blades which are disposed on a rotor mounted on a turbine unit of a gas turbine, with an equal interval kept (hereinafter, the same shall apply to the First Embodiment and Second Embodiment).

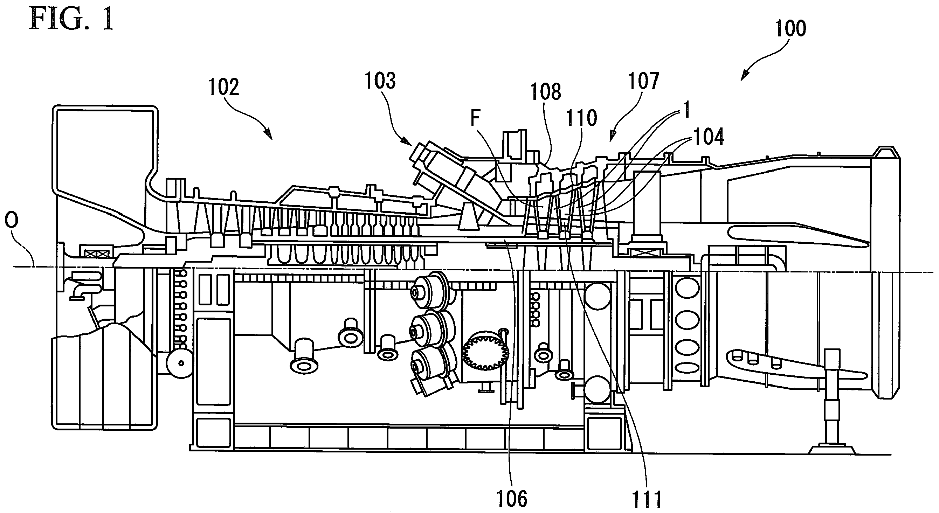

As shown in Fig. 1, a gas turbine 100 is provided with a compressor 102 for generating compressed air, a burner 103 for supplying a fuel to the compressed air supplied from the compressor 102 to generate a combustion gas and a turbine 107 on which turbine vanes 104 and turbine blades 1 are alternately placed and which rotates a rotor 106 having turbine blades 1 by the combustion gas supplied from the burner 103. In the turbine 107, an interior of a tubular casing 108 placed coaxially with an axis line O of the rotor 106 acts as a combustion gas flow channel F. The combustion gas flow channel F is separated on an outer circumference side thereof from the casing 108 by a tubular outer-circumferential side end wall 110 installed on an inner circumference side of the casing 108 and also separated on an inner circumference from the rotor 106 by a tubular inner-circumferential side end wall 111 installed on an outer circumference side of the rotor 106. Thus, the combustion gas flow channel F is provided as a flow channel having a donut-shaped cross section along a direction of the axis line O. Then, the plurality of turbine vanes 104 and turbine blades 1 made up of several stages are placed in a radial manner, respectively, inside the combustion gas flow channel F.

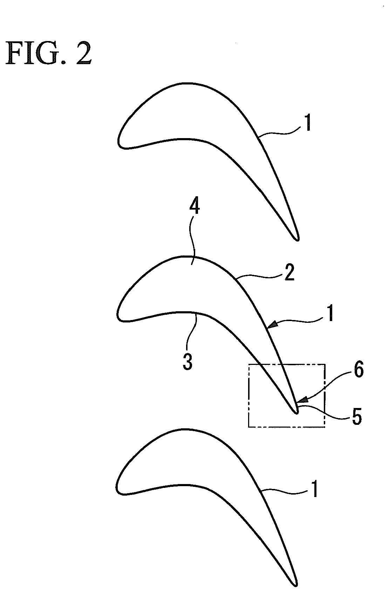

Fig. 2 shows a profile of the turbine blade 1 which is the blade body of the present example. The turbine blade 1 is provided with a main body 4 having a dorsal face 2 and a ventral face 3. The dorsal face 2 is formed as a curved face relatively small in curvature radius, and the ventral face 3 is formed as a curved face greater in curvature radius than the dorsal face.

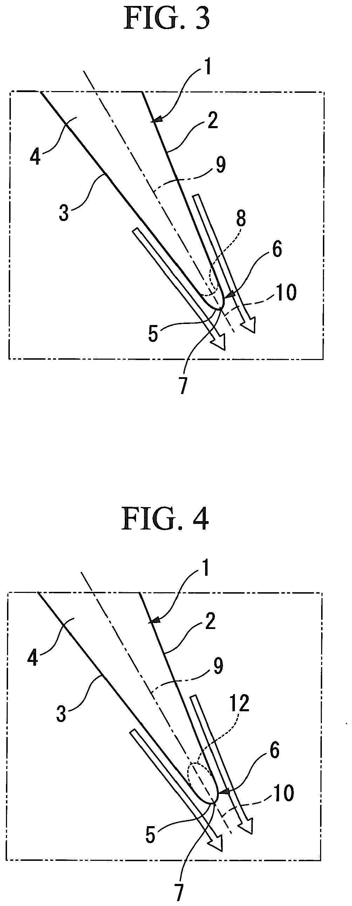

The turbine blade 1 is also provided with a trailing edge portion 6 which connects the dorsal face 2 of the main body 4 to the ventral face 3 thereof with a continuous curved face 5 on a downstream side (a side indicated with an arrow in Fig. 3) in a direction at which a fluid flows. As shown in Fig. 3, the trailing edge portion 6 is gradually decreased in curvature radius from one of the dorsal face 2 and the ventral face 3 toward the rear end portion 7 which is positioned most downstream in the direction at which the fluid flows and decreased to the greatest extent in curvature radius at the rear end portion 7, thereafter gradually increased in curvature radius from the rear end portion 7 toward the other of the dorsal face 2 and the ventral face 3 and arrives at the other of the dorsal face 2 and the ventral face 3. The trailing edge portion 6 is connected to the dorsal face 2 and the ventral face 3 smoothly so as not to have a step or an angular part, and the rear end portion 7 is disposed on an extended line 10 of the camber line 9 which is a center of the blade of the main body 4.

A circular arc 8 indicated with a broken line in Fig. 3 is the shape of a trailing edge of a conventional blade body, that is, a completely round circular arc (half round). The trailing edge portion 6 of the present example is such that the curved face 5 is gradually decreased in curvature radius as it approaches the rear end portion 7. Therefore, the trailing edge portion 6 is formed so as to extend narrowly further downstream than the circular arc 8, and a base end side of the trailing edge portion 6 is formed so as to give thickness equal to that of the trailing edge of the conventional blade body. As a result, a wake can be made narrow, while the trailing edge portion 6 is kept sufficiently strong. The shape in which the trailing edge portion 6 is gradually decreased in curvature radius as it approaches the rear end portion 7 may include, for example, an oval arc 12 in which a long axis is superimposed on the extended line 10 of the camber line 9 as shown in Fig. 4.

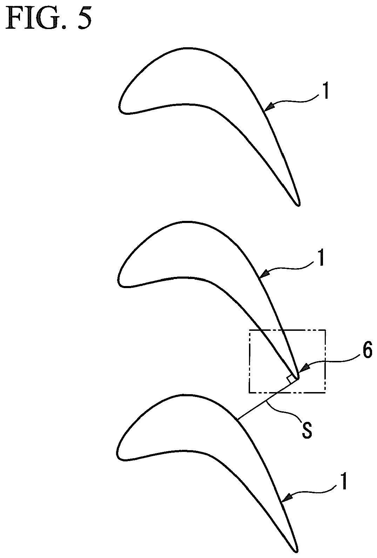

As shown in Fig. 5, in an interspace between turbine blades 1 adjacent to each other of the plurality of the turbine blades 1 disposed at an equal interval, the trailing edge portion 6 is gradually decreased in curvature radius according to the shape of the dorsal face 2 of the blade 1 in such a manner that the cross-sectional area of the throat S that is a part at which the width of a flow channel between turbine blades 1 adjacent to each other is narrowest than the other part can be maintain equal the size of the cross-sectional area of the throat S before an improvement in the trailing edge portion 6.

Therefore, according to the turbine blade 1 and the rotary machine of the above-described example, the curved face 5 is gradually decreased in curvature radius and made thinner as the curved face 5 of the trailing edge portion 6 continued to the dorsal face 2 or the ventral face 3 of the main body 4 approaches the rear end portion 7. Thus, as compared with a conventional case that a trailing edge portion of a blade body is formed so that a cross section thereof simply gives a substantially semicircular shape, with the strength secured, or an angle of a point at which the dorsal face is connected to the ventral face is made substantially perpendicular, separation of a flow coming from a blade surface takes place at a backward position, by which a wake from the trailing edge portion 6 can be made narrow. As a result, it is possible to reduce flow loss and improve efficiency.

Since the rear end portion 7 is disposed on the extended line 10 of the camber line 9 of the main body 4, a change in curvature radius is made equal between the ventral face side and the dorsal face side, thus making it possible to easily form the shape of a blade smoothly.

In addition, since the trailing edge portion 6 does not affect to maintain the throat S between blades, it is possible to prevent a change in flow rate due to a reduction in the size of throat or the like.

It is noted that in the above example, a description has been given with reference to the turbine blade of a gas turbine, as an example. However, the present invention shall not be limited thereto and may be applicable to a turbine vane. Further, the present invention shall not be limited to the blade body of the gas turbine but may be applicable to a blade body used in a compressor, a fan, a steam turbine, a wind mill or an airplane. The description has been given of a case where the present invention is applied to the shape of a blade in which the dorsal face is different from the ventral face in curvature radius but may be applicable to a symmetrical shape of a blade in which a dorsal face and a ventral face of the blade are symmetrical in shape with each other.

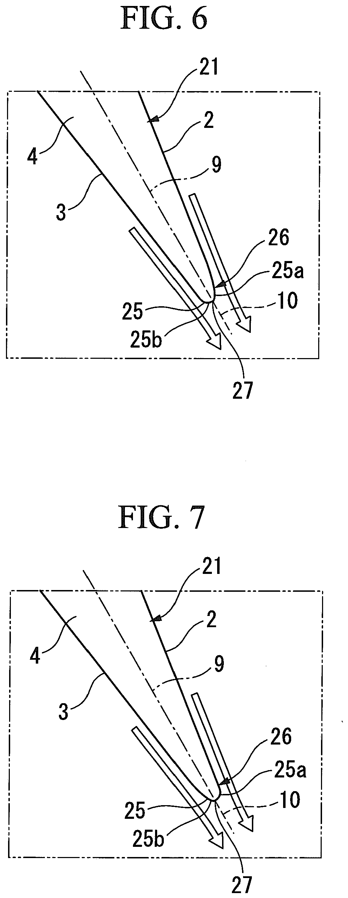

Next, a description will be given of a turbine blade 21 which is a blade body of the First Embodiment of the present invention with reference to Fig. 6 and Fig. 7. Parts which are the same as those of the turbine blade 1 of the Example will be given the same reference numerals in describing them.

As shown in Fig. 6, the turbine blade 21 of the First Embodiment is provided with a main body 4 having a dorsal face 2 and a ventral face 3 and also provided with a trailing edge portion 26 which connects the dorsal face 2 to the ventral face 3 with a continuous curved face 25 on a downstream side in a direction at which a fluid flows. The curved face 25 of the trailing edge portion 26 is such that a rear end portion 27 which is positioned most downstream in the direction at which the fluid flows is disposed on an extended line 10 of a camber line 9.

The curved face 25 of the trailing edge portion 26 is gradually decreased in curvature radius from one of the dorsal face 2 and the ventral face 3 toward the rear end portion 27, decreased to the greatest extent in curvature radius at the rear end portion 27, thereafter, increased gradually in curvature radius from the rear end portion 27 toward the other of the dorsal face 2 and the ventral face 3 and arrives at the other of the dorsal face 2 and the ventral face 3.

Here, the curved face 25 of the trailing edge portion 26 shown in Fig. 6 is configured with a curved face 25a on a dorsal face side which arrives at the rear end portion 27 from the dorsal face 2 and a curved face 25b on a ventral face side which arrives at the rear end portion 27 from the ventral face 3. The curved face 25a and the curved face 25b are formed so as to be decreased in curvature radius as they approach each other to the rear end portion 27 but are mutually different in the ratio of decrease of the curvature radius.

More specifically, the curved face 25a is formed so as to be relatively constant in the rate of decrease of the curvature radius from the dorsal face 2 toward the rear end portion 27. However, the curved face 25b is formed so as to be lower in the rate of decrease of the curvature radius at a position away from the rear end portion 27 from the ventral face 3 toward the rear end portion 27 and so as to be higher in the vicinity of the rear end portion 27. Then, the curved face 25a is lower than the curved face 25b in the rate of decrease of the curvature radius in the vicinity of the rear end portion 27 toward the rear end portion 27.

Even where, as found in the above-described turbine blade 21 of the First Embodiment, the curved face 25a of the trailing edge portion 26 on the dorsal face side is different from the curved face 25b on the ventral face side in the rate of decrease of the curvature radius toward the rear end portion 27, the vicinity of the rear end portion 27 can be formed thinner with the continuous curved face 25 than a conventional case that a blade body of a trailing edge portion is formed so that a cross section thereof simply gives a substantially semicircular shape or an angle of a point where an end of a dorsal edge line is connected to an end of a ventral edge line is made substantially perpendicular. Therefore, separation of a flow from a blade surface takes places at a backward position, by which a wake from the trailing edge portion 26 can be made narrow. As a result, it is possible to reduce flow loss and improve efficiency.

In the First Embodiment described above, a description has been given of a case where the curved face 25a on the dorsal face side is set lower than the curved face 25b on the ventral face side in the rate of decrease of the curvature radius in the vicinity of the rear end portion 27 toward the rear end portion 27. Moreover, depending on conditions or the like for maintaining the throat S, it is acceptable that, for example, as shown in Fig. 7, the decrease ratio of the curvature radius is replaced between the curved face 25a and the curved face 25b, by which the curved face 25b on the side of the ventral face 3 is set lower than the curved face 25a on the dorsal face side in the rate of decrease of the curvature radius in the vicinity of the rear end portion 27 toward the rear end portion 27.

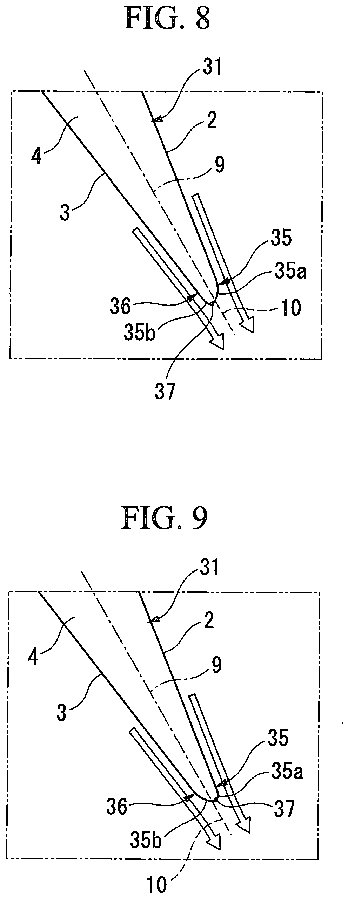

Next, a description will be given of a turbine blade 31 which is a blade body of the Second Embodiment of the present invention with reference to Fig. 8 and Fig. 9. The Second Embodiment is such that the rear end portion 27 of the First Embodiment is deviated further to the dorsal face side or to the ventral face side than the extended line 10 of the camber line 9. Parts which are the same as those of the Example and First Embodiment described above are given the same reference numerals in describing them.

As shown in Fig. 8, the turbine blade 31 of the Second Embodiment is, as with the turbine blade 21 of the First Embodiment, provided with a main body 4 having a dorsal face 2 and a ventral face 3 and also provided with a trailing edge portion 36 which connects the dorsal face 2 to the ventral face 3 with a continuous curved face 35 on a downstream side in a direction at which a fluid flows.

A rear end portion 37 of the curved face 35 of the trailing edge portion 36 which is positioned most downstream in a direction at which the fluid flows is disposed further to the side of the ventral face 3 side than an extended line 10 of a camber line 9.

The curved face 35 of the trailing edge portion 36 is gradually decreased in curvature radius from one of the dorsal face 2 and the ventral face 3 toward the rear end portion 37, decreased to the greatest extent in curvature radius at the rear end portion 37, thereafter, gradually increased in curvature radius from the rear end portion 37 toward the other of the dorsal face 2 and the ventral face 3 and arrives at the other of the dorsal face 2 and the ventral face 3.

As with the First Embodiment described above, the curved face 35 of the trailing edge portion 36 is such that the curved face 35a on a dorsal face side is different from the curved face 35b on a ventral face side in the rate of decrease of the curvature radius from each face to the rear end portion 37. More specifically, the curved face 35a is formed so as to be relatively constant in the rate of decrease of the curvature radius from the dorsal face 2 to the rear end portion 37. However, the curved face 35b is formed so as to be lowered in the rate of decrease of the curvature radius from the ventral face 3 to the rear end portion 37 at a position away from the rear end portion 37 and formed so as to be higher in the vicinity of the rear end portion 37. Then, the curved face 35a has a lower curvature radius than the curved face 35b in the rate of decrease of the curvature radius is lower than the curved face 35b in a decrease ratio of the curvature radius toward the rear end portion 37.

In the turbine blade 31 of the Second Embodiment as well, as with the First Embodiment, the vicinity of the rear end portion 27 can be formed thinner with the continuous curved face 35, than a conventional case that a trailing edge portion of a blade body is formed so that a cross section thereof simply gives a half round shape, or an angle of a point where an end portion of a dorsal edge line is connected to an end portion of a ventral edge line is made substantially perpendicular. Therefore, separation of a flow coming from a blade surface takes place at a backward position, by which a wake from the trailing edge portion 36 can be made narrow. As a result, it is possible to reduce flow loss and improve efficiency.

In the Second Embodiment described above, a description has been given of a case where the rear end portion 37 is deviated further to the ventral face 3 side than the extended line 10 and also the curved face 35a on the dorsal face side is set lower than the curved face 35b on the ventral face side in the rate of decrease of the curvature radius in the vicinity of the rear end portion 37 toward the rear end portion 37. Meanwhile, it is acceptable that depending on conditions or the like of retaining the throat S, for example, as shown in Fig. 9, the rear end portion 37 is deviated further to the dorsal face 2 side than the extended line 10, the decrease ratio of the curvature radius toward the rear end portion 37 described above is exchanged between the curved face 35a and the curved face 35b, by which the curved face 35b on the ventral face side is set lower than the curved face 35a on the dorsal face side in the rate of decrease of the curvature radius in the vicinity of the rear end portion 37 toward the rear end portion 37.

### Description of Reference Numerals

- 1, 21, 31: turbine blade,
- 2: dorsal face,
- 3: ventral face,
- 4: main body,
- 5, 25, 35: curved face,
- 6, 26, 36: trailing edge portion,
- 7, 27, 37: rear end portion,
- 9: camber line,
- 10: extended line,
- 100: gas turbine,
- S: throat

## Claims

1. A blade body for a rotary machine, the blade body being intended to be disposed in plural number on a rotary body at an equal interval in the circumferential direction of the rotary body to define a flow channel through interspaces between adjacent blade bodies, the blade body comprising:
a main body (4) which has a dorsal face (2) and a ventral face (3); and
a trailing edge portion (26;36) which connects the dorsal face (2) to the ventral face (3) with a continuous curved face (25;35),
wherein the trailing edge portion (26;36) is the portion of the dorsal and ventral faces (2,3) of the main body that extends further downstream from points on the dorsal and ventral faces (2,3) that are determined as connection points of a fictive circular arc (8) which connects the dorsal and ventral faces (2,3) and that define the location of the throat (S) which is the part at which the flow channel between adjacent blade bodies is narrowest,
wherein the curved face (25;35) of the trailing edge portion (26;36) is gradually decreased in curvature radius from one of the dorsal face (2) and the ventral face (3) toward a rear end portion (27;37) of the main body (4) which is positioned most downstream in a direction in which a fluid flows through the flow channel defined between adjacent blade bodies,
wherein the curved face (25;35) of the trailing edge portion (26;36) is decreased to the greatest extent in curvature radius at the rear end portion (27;37),
wherein the curved face (25;35) of the trailing edge portion (26;36) is gradually increased in curvature radius from the rear end portion (27;37) toward the other of the dorsal face (2) and the ventral face (3), and
wherein the trailing edge portion (26;36) is such that the change of the curvature radius of a part (25a;35a) of the curved face (25;35) positioned at the dorsal face side in the vicinity of the rear end portion (27;37) is different from the change of the curvature radius of a part (25b;35b) of the curved face (25;35) positioned at the ventral face side in the vicinity of the rear end portion (27;37).

2. A rotary machine which is provided with a plurality of blade bodies according to Claim 1 disposed in plural number on a rotary body at an equal interval in the circumferential direction of the rotary body.

## Patentansprüche

1. Ein Schaufelkörper für eine Drehmaschine, wobei der Schaufelkörper in einer Mehrzahl an einem Drehkörper in einem gleichen Intervall in der Umfangsrichtung des Drehkörpers angeordnet werden soll, um einen Strömungskanal durch Zwischenräume zwischen benachbarten Schaufelkörpern zu definieren, wobei der Schaufelkörper aufweist:
einen Hauptkörper (4), der eine dorsale Fläche (2) und eine ventrale Fläche (3) besitzt, und
einen Hinterkantenabschnitt (26;36), der die dorsale Fläche (2) mit der ventralen Fläche (3) mit einer kontinuierlichen gekrümmten Fläche (25;35) verbindet,
wobei der Hinterkantenabschnitt (26;36) der Abschnitt der dorsalen und ventralen Flächen (2,3) des Hauptkörpers ist, der sich weiter stromab von Punkten an den dorsalen und ventralen Flächen (2,3) erstreckt, welche als Verbindungspunkte eines fiktiven Kreisbogens (8) bestimmt sind, der die dorsalen und ventralen Flächen (2,3) verbindet und der den Ort der Verengung (S) definiert, welche der Teil ist, an dem der Strömungskanal zwischen benachbarten Schaufelkörpern am engsten ist,
wobei die gekrümmte Fläche (25;35) des Hinterkantenabschnitts (26;36) allmählich in dem Krümmungsradius von einer von der dorsalen Fläche (2) und der ventralen Fläche (3) zu einem hinteren Endabschnitt (27;37) des Hauptkörpers (4), der am weitesten stromab in einer Richtung positioniert ist, in der ein Fluid durch den Strömungskanal, der zwischen benachbarten Schaufelkörpern definiert ist, strömt, verringert ist,
wobei die gekrümmte Fläche (25;35) des Hinterkantenabschnitts (26;36) in größtem Ausmaß in dem Krümmungsradius an dem hinteren Endabschnitt (27;37) verringert ist,
wobei die gekrümmte Fläche (25;35) des Hinterkantenabschnitts (26;36) in dem Krümmungsradius von dem hinteren Endabschnitt (27;37) zu der anderen von der dorsalen Fläche (2) und der ventralen Fläche (3) allmählich vergrößert ist, und
wobei der Hinterkantenabschnitt (26;36) so ausgebildet ist, dass die Änderung des Krümmungsradius eines Teils (25a;35a) der gekrümmten Fläche (25;35), der an der Seite der dorsalen Fläche in der Umgebung des hinteren Endabschnitts (27 ; 37) positioniert ist, sich von der Änderung des Krümmungsradius eines Teils (25b;35b) der gekrümmten Fläche (25;35), der an der Seite der ventralen Fläche in der Umgebung des hinteren Endabschnitts (27;37) positioniert ist, unterscheidet.

2. Eine Drehmaschine, die mit einer Vielzahl von Schaufelkörpern gemäß Anspruch 1 versehen ist, die in Mehrzahl an einem Drehkörper in einem gleichen Intervall in der Umfangsrichtung des Drehkörpers angeordnet sind.

## Revendications

1. Corps d'aube d'une machine tournante, le corps d'aube étant destiné à être disposé à plusieurs sur un corps tournant à un intervalle égal dans la direction circonférentielle du corps tournant, pour définir un canal d'écoulement par des espaces intermédiaires entre des corps d'aube voisins, le corps d'aube comprenant :
un corps (4) principal, qui a une face (2) dorsale et face (3) ventrale ; et
une partie (26 ; 36) de bord de fuite, qui relie la face (2) dorsale à la face (3) ventrale par une face (25 ; 35) incurvée continue,
dans lequel la partie (26 ; 36) de bord de fuite est la partie des faces (2, 3) dorsale et ventrale du corps principal, qui s'étend plus en aval de points sur les faces (2, 3) dorsale et ventrale, qui sont déterminés comme étant des points de liaison d'un arc (8) circulaire fictif, qui relie les faces (2, 3) dorsale et ventrale et qui définissent l'emplacement de la gorge (S), qui est la partie où le canal d'écoulement entre des corps d'aube voisins est la plus étroite,
dans lequel la face (25 ; 35) incurvée de la partie (26 ; 36) de bord d'attaque est diminuée graduellement en rayon de courbure de l'une de la face (2) dorsale et de la face (3) ventrale à une partie (27 ; 37) d'extrémité arrière du corps (4) principal, qui est placée la plus en aval dans un sens dans lequel un fluide s'écoule dans le canal d'écoulement défini entre des corps d'aube voisins,
dans lequel la face (25 ; 35) incurvée de la partie (26 ; 36) de bord de fuite est diminuée le plus en rayon de courbure à la partie (27 ; 37) d'extrémité arrière,
dans lequel la face (25 ; 35) incurvée de la partie (26 ; 36) de bord de fuite est augmentée graduellement en rayon de courbure de la partie (27 ; 37) d'extrémité arrière à l'autre de la face (2) dorsale et de la face (3) ventrale, et
dans lequel la partie (26 ; 36) de bord de fuite est telle que le changement du rayon de courbure d'une partie (25a ; 35a) de la face (25 ; 35) incurvée, placée du côté de la face dorsale à proximité de la partie (27 ; 37) d'extrémité arrière est différent du changement du rayon de courbure d'une partie (25b ; 35b) de la face (25 ; 35) incurvée, placée du côté de la face ventrale à proximité de la partie (27 ; 37) d'extrémité arrière.

2. Machine tournante, qui est pourvue d'une pluralité de corps d'aube suivant la revendication 1, disposées à plusieurs sur un corps tournant à un intervalle égal dans la direction circonférentielle du corps tournant.
